**Europäisches Patentamt**

**European Patent Office**

**Office européen des brevets**

(19)

(11) Veröffentlichungsnummer: **0 102 626**
**B1**

(12) **EUROPÄISCHE PATENTSCHRIFT**

(45) Veröffentlichungstag der Patentschrift:
**19.11.87**

(51) Int. Cl.⁴: **B 27 B 33/08**

(21) Anmeldenummer: **83108658.2**

(22) Anmeldetag: **02.09.83**

(54) **Spannungsausgleichsschlitze in Kreissägeblättern.**

(30) Priorität: **03.09.82 DE 3232778**

(43) Veröffentlichungstag der Anmeldung:
**14.03.84 Patentblatt 84/11**

(45) Bekanntmachung des Hinweises auf die Patenterteilung:
**19.11.87 Patentblatt 87/47**

(84) Benannte Vertragsstaaten:
**AT BE CH DE FR GB IT LI SE**

(56) Entgegenhaltungen:
**DE - A - 2 654 625**
**DE - U - 7 916 756**
**SU - A - 802 020**
**US - A - 2 563 559**

(73) Patentinhaber: **Jansen-Herfeld, Röttger,**
**Königstrasse 144-146, D-5630 Remscheid (DE)**

(72) Erfinder: **Jansen-Herfeld, Röttger, Dipl.-Ing.,**
**Königstrasse 146 a, D-5630 Remscheid (DE)**

## Beschreibung

Es sind Kreissägeblätter bekannt geworden, die radiale Schlitze aufwiesen, um die durch die Fliehkräfte bedingten Spannungen im Innenbereich des Sägeblattes zu reduzieren und auf die Peripherie zu konzentrieren. Insbesondere in DE-A-2 654 625 sind derartige Sägeblätter beschrieben, die jedoch den Nachteil hatten, dass durch die Schlitzung Reibungsprobleme mit den Werkstücken entstanden und keine grossen Antriebsmomente übertragen werden konnten und nur eine geringe Schwingungsdämpfung erreicht wurde. Ausserdem hatten diese Sägen aufgrund des weiten Abstandes der Schlitze den Nachteil, dass die Fliehkraftspannungen nicht ausreichend auf die Peripherie konzentriert werden konnten. Ausserdem wiesen diese Sägeblätter den Nachteil auf, dass beim Einbringen der Innenspannung durch plastische Verformung mittels Walzen der Walzvorgang jeweils durch die breiten Schlitze unterbrochen werden musste, da die Schlitze so breit waren, dass die Walzen in den Schlitzen hängen blieben bzw. die Schlitzkanten zerstörten und damit eine Rissgefahr entstand.

Der Erfindung liegt also die Aufgabe zugrunde, ein Sägeblatt zu schaffen, das eine Reduzierung der Fliehkraftspannungen im Innenbereich und deren Erhöhung im Peripheriebereich ermöglicht, das durchgehend, auch im Schlitzbereich, gewalzt werden kann und das aufgrund seiner geringen Schlitzbreite nur unwesentliche Reibungsverluste erzeugt, dessen Schlitze kein Sägemehl üblicher Korngrösse aufnehmen können, eine gute Schwingungsdämpfung aufweist und grosse Antriebsmomente übertragen kann.

Diese Aufgabe wird durch die Merkmale des Anspruchs 1 gelöst. Zur Reibungsreduzierung enden die Schlitze in einer besonderen Ausführungsart der Erfindung, nicht in Löchern, sondern in einer offenen Kreis- oder Spiralform, so dass also die Ausnehmungen dort auch wieder den Wert 2 mm in der Breite nicht überschreiten. Um die Fliehkraftspannungen im Peripheriebereich noch weiter zu erhöhen, können die äusseren Schlitze an ihren äusseren Enden mit einem tangentialen Bereich versehen und/oder in ihrer Anzahl verdoppelt werden. Ausserdem können die inneren Schlitze zur Vermeidung von Rissen bei grossen Antriebsmomenten im Bereich der Spannflansche an ihren Kanten gebrochen sein. Die Schlitze können in Umfangsrichtung nicht gleichmässig periodisch angeordnet sein.

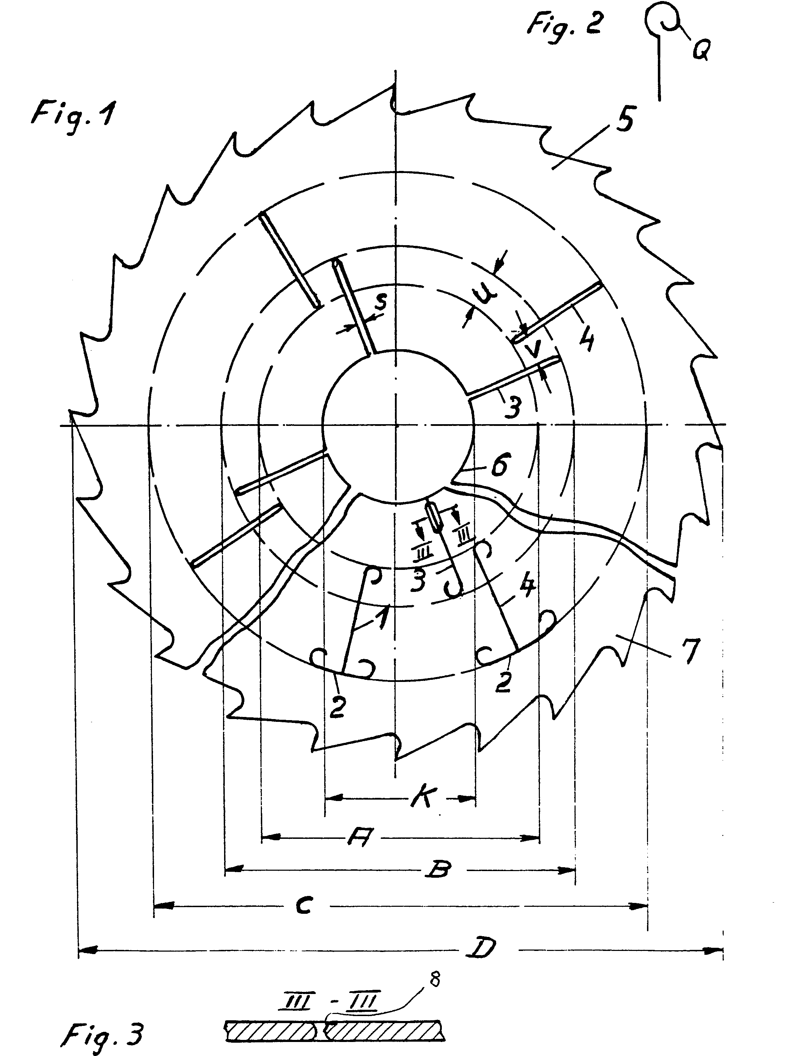

Die erfindungsgemässen Schlitzungen sind in den Figuren 1 bis 3 dargestellt.

Figur 1 zeigt ein Sägeblatt (5) in Seitenansicht mit vier von der Bohrung (6) ausgehenden inneren Schlitzen (3), die auf dem Durchmesser B enden und vier parallel verlaufenden äusseren Schlitzen (4), die auf dem Durchmesser A beginnen und auf dem Durchmesser C enden. Die Schlitzbreite ist mit S bezeichnet, die parallele Überlappungslänge U und der Abstand V. Im unteren Ausschnitt (7) dieser Figur 1 ist der äussere Schlitz (4) an seinem äusseren Ende mit einem sich beidseitig in tangentialer Richtung erstreckenden Abschnitt (2) dargestellt und ein zusätzlicher äusserer Schlitz (1) zur Verdoppelung der Anzahl der äusseren Schlitze (4) dargestellt. Ferner ist in diesem Ausschnitt (7) die im Bereich der nicht dargestellten Spannflansche abgerundete Kante (8) des inneren Schlitzes (3) gezeigt.

Figur 2 zeigt die offene Kreis- bzw. Spiralform Q der Schlitzenden.

Figur 3 zeigt einen Schnitt nach III–III in Figur 1 mit den abgerundeten Kanten (8) der inneren Schlitze (3).

## Patentansprüche

1. Kreissägeblatt mit mindestens drei von der Bohrung (6) zur Aufnahme der Antriebsmittel ausgehenden radialen inneren Schlitzen (3) und mindestens drei weiteren äusseren Schlitzen (4), die sich mit diesen in einem Durchmesserbereich überlappen und wobei der Durchmesser (C), auf dem die radial äusseren Enden der radial aussen liegenden Schlitze (4) liegen, grösser als die Hälfte der Summe des Durchmessers (D) des Sägeblattes (5, 7) und des Durchmessers (K) der Bohrung (6) ist und die Schlitze im Überlappungsbereich etwa parallel verlaufen, dadurch gekennzeichnet, dass die Schlitze eine maximale Breite (S) von 2 mm aufweisen und das Verhältnis der radialen Überlappungslänge (U) zum tangentialen Abstand (V) grösser als 1 ist.

2. Kreissägeblatt nach Anspruch 1 dadurch gekennzeichnet, dass die Schlitze (1), (3), (4) an ihren Enden eine Spiralform oder einen Kreisabschnitt Q aufweisen.

3. Kreissägeblatt nach einem oder mehreren der Ansprüche 1 bis 2 dadurch gekennzeichnet, dass die äusseren Schlitze (4) mit ihrem äusseren Bereich tangential verlaufen.

4. Kreissägeblatt nach einem oder mehreren der Ansprüche 1 bis 3 dadurch gekennzeichnet, dass die Schlitze (1), (3), (4) in Umfangsrichtung nicht gleichmässig periodisch angeordnet sind.

5. Kreissägeblatt nach einem oder mehreren der Ansprüche 1 bis 4 dadurch gekennzeichnet, dass die inneren Schlitze (3) in der Nähe der Bohrung (6) abgerundete Kanten (8) aufweisen.

## Claims

1. A circular saw blade with at least three radial inner slots (3) extending from a bore (6) for receiving the drive means, and at least three additional outer slots (4) which overlap the inner slots in a diameter region, the diameter (C) on which the ends of the radially outer slots (4) lie being greater than half the sum of the diameter (D) of the saw blade (5, 7) and the diameter (K) of the bore (6) and the slots extending substantially parallel in the overlap region, characterised in that the slots have a maximum width (S) of 2 mm and the ratio of the radial length (U) of overlap to the tangential spacing (V) is greater than unity.

2. A circular saw blade according to claim 1, characterised in that the slots (1, 3, 4) end in a spiral or a circle portion Q.

3. A circular saw blade according to one or both of claims 1 and 2, characterised in that the outer regions of the outer slots (4) estend tangentially.

4. A circular saw blade according to one or more of claims 1 to 3, characterised in that the slots (1, 3, 4) are not disposed uniformly periodically in the peripheral direction.

5. A circular saw blade according to one or more of claims 1 to 4, characterised in that the inner slots (3) have rounded edges (8) near the bore (6).

## Revendications

1. Lame de scie circulaire comportant au moins 3 fentes radiales intérieures (3) partant du perçage (6) et au moins 3 autres fentes extérieures (4) qui se recouvrent avec les premières sur une zone du diamètre, caractérisée en ce que les fentes présentant une largeur maximale S de 2 mm et en ce que le rapport de la distance radiale U de recouvrement à la distance suivant la tangente V est supérieur à 1, en ce que le diamètre C est plus grand que 0,5 (diamètre D + diamètre K) et en ce que les fentes sont disposées de façon approximativement parallèle dans leur zone de recouvrement.

2. Lame de scie circulaire selon la Revendication 1, caractérisée en ce que les fentes (1), (3), (4) présentent à leur extrémité une forme en spirale ou en arc de cercle.

3. Lame de scie circulaire selon l'une quelconque des Revendications 1 et 2, caractérisée en ce que les fentes extérieures (4) sont orientées tangentiellement dans leur zone extérieure.

4. Lame de scie circulaire selon l'une quelconque des Revendications 1 à 3, caractérisée en ce que les fentes (1), (3), (4) ne sont pas réparties périodiquement et uniformément dans la direction de la circonférence.

5. Lame de scie circulaire selon l'une quelconque des Revendications 1 à 4, caractérisée en ce que les fentes intérieurs (3) présentent à proximité du perçage (6) des arêtes arrondies (8).

0 102 626

*Fig. 2*

*Fig.1*

*Fig. 3*

III - III